# EUROPEAN PATENT SPECIFICATION

(11) **EP 0 387 539 B1**
(45) Date of publication and mention of the grant of the patent: **21.07.1993**
(21) Application number: 90102948.8
(22) Date of filing: 15.02.1990
(51) Int. Cl.: F16H 7/12

(54) **Tensioning device for flexible driving belts**
Treibriemenspanner
Tendeur pour corroie de transmission

(30) Priority: 15.03.1989 IT 1978889
(43) Date of publication of application: 19.09.1990
(73) Proprietor: DAYCO PTI S.p.A., 66013 Chieti Scalo (Chieti) (IT)
(72) Inventor: Macchiarulo, Vincenzo, I-65100 Pescara (IT); Robecchi, Edoardo, I-20099 Sesto S. Giovanni (Milan) (IT); Ruffini, Alberto, I-66100 Chieti (IT)
(74) Representative: Dr. Elisabeth Jung Dr. Jürgen Schirdewahn Dipl.-Ing. Claus Gernhardt

(56) References cited:
- EP-A- 0 243 237
- GB-A- 2 181 814
- US-A- 4 411 638
- US-A- 4 466 803
- US-A- 4 706 696

## Description

The present invention is directed to a tensioning device for flexible driving belts and more particularly the invention is directed to a tensioner intended to be associated with a flexible belt bound around the pulleys of a drive to originate an annular configuration with a predetermined tensioning in order to guarantee the correct working of the drive.

As known in the state of the art a driving belt is wound around a plurality of pulleys one of which is a driving pulley and the other ones are driven pulleys suitable for the movement of various accessories.

For instance a toothed belt can be inserted in the drive of a motorvehicle for transmitting the motion from the driving shaft to the camshaft and also for instance a belt, in particular a V-belt, can be used in a motorvehicle for transmitting the motion from the crankshaft to a plurality of pulleys associated, on their turn with various devices, among which the engine cooling fan, the engine water pump, the alternator, the compressor of the conditioning system if present.

In general the belt in many of the cited applications connecting to one another the various pulleys for guiding the plurality of devices arranged in different positions, develops according to an annular configuration of the zigzag type requiring the use of a suitable device known as tensioner apt to exert own the loose branch of the belt a predetermined tensioning that guarantees the regular working of the drive.

Moreover as known from U.S. patent No. 4,706,696, a tensioner can be formed mainly by a hydraulic cylinder inside which there is a piston immersed in a viscous liquid that, on its turn, is associated with a stem projecting from the upper base of the cylinder.

The piston part opposite to the stem is provided with a cylindrical spring applied between the lower base of the cylinder and the inner face of the piston.

The piston is crossed by a hole, which in the rest position is closed by a ball thrusted against the hole thanks to the action of an auxiliary opposite spring kept in an appropriate seat of the lower surface of the piston.

In this solution the free end of the stem acts on an appropriate lever anchored at one end to a structure fixed with respect to the belt and having the free end associated with a roller which presses with a given force the back of the belt.

In presence of slackenings of the belt caused by instantaneous torque changes on the driving pulley or by any other cause, the pressure exerted on the lower part of the piston by the spring suitable for tensioning the belt is no longer compensated by the pressure that the belt exerts in opposite direction on the stem, so that the piston has the tendency to move upwards obliging the liquid to pass through the hole foreseen on the piston winning the stifness of the conteracting spring which blocked the exit of the hole through the cited ball.

In this tensioning device the dimensions of the hole crossing the piston are conveniently chosen in order to reduce the resistance met by the liquid on passing through the hole itself and to facilitate the shifting of the stem upwards so that the roller presses again on the back of the belt restoring a correct tensioning of the latter.

In presence of increases of tension of the belt caused for instance by thermal expansion phenomena tending to move away the supports of the two pulleys between which the belt branch thrusted by the tensioner is arranged, the belt exerts on the stem a force in direction opposite to what previously described in the loose condition.

In this situation the tensioning device is planned in such a way as to damp the movements of the belt through a blow-by of liquid between the upper chamber and the lower chamber of the piston; the blow-by of liquid is obtained by means of a very narrow hydraulic passage between the piston and the cylinder wall.

In practice, the thrust that the belt transmits to the stem enables the pressure of the liquid present in the lower chamber to maintain the ball against the hole crossing the piston, blocking thus said hole and forcing the liquid to pass from the lower chamber to the upper one through the very reduced space existing between the piston and the cylinder.

In substance there occurs a liquid rolling to which a damping of the movement transmitted by the belt to the tensioner corresponds.

U.S. patents No. 4,411,638 and 4,466,803 disclose further solutions.

All these solutions provide also a tensioning spring apt to shift the piston together with the stem for restoring a correct tensioning of the belt and a recourse to a proper choice of two valves and of suitable hydraulic circuits connected to the valves.

In substance it is foreseen that the thrust of the piston upwards is facilitated, while the thrust of the piston in opposite direction is slower; the thrust of the piston upwards is facilitated for the fact that when one of the valves opens allows the passage of the viscous liquid from the upper chamber to the lower one, for instance through a large section conduit while to obtain the damping of the movements of the belt it is foreseen that the second valve makes the liquid pass from the lower chamber to the upper one through a conduit having a section greatly narrower than that of the first conduit, or anyhow through a conduit provided with a narrowing so as to increase the resistance met by the liquid on passing between the two chambers.

A further example of tensioning device in accordance with the features of the preamble of claim 1 is described in document GB-A 2 181 814. This device is formed by a first and a second piston frictionally engaged within a cylinder bore and urged respectively by a first spring placed within the cylinder bore and a second spring acting on the stem thereof. Tension decreases of the belt are restored by the first piston, meanwhile increases of tension are dampened by both the pistons frictionally engaging the bore.

Unfortunately in all these solutions the spring intended to restore the belt tensioning is strictly connected to the viscous means and this obviously retards the restoration of the wished tensioning.

In fact, the valve and the relative circuit chosen with a suitable determination of the size to facilitate the step of maximum excursion of the stem determine a certain forcing of the liquid through the passage section between the two chambers and this determines on its turn a slowing down in the action of the tensioning spring.

This solution can result completely unacceptable in a drive and anyhow it would produce numerous risks for the integrity of the system to which the drive is connected.

In fact, in the case of a toothed belt applied between the driving shaft and the camshaft, in presence of slackenings of the belt not compensated immediately by the action of the spring of the tensioner, the skipping phenomenon could occur in relation to one or more teeth of the belt from the teeth of the pulley by which the belt meshes with the consequence of originating a displacement in the adjusting system of the valves set in action by the camshaft and in some circumstances irreparable damages to the motorvehicle engine.

Moreover in all the applications in which recourse is made to a device for the transmission of motion between belt and pulley through the exchange of friction forces, a retard in the intervention of the tensioning spring in presence of slackenings of the belt produces unavoidably sliding phenomena between the belt and the surfaces of the pulleys with the consequence of damaging the elastomeric material for the dissipation of energy due to the strong friction which is created.

Then in general all the solutions used have a certain complexity deriving from the use of valves and relative circuits that permit an asymmetric working of the tensioning device.

Therefore the aim of the present invention is to provide a tensioning device for flexible driving belt devoid of all the drawbacks previously cited.

The object of the present invention is a tensioning device for a flexible belt wound around a plurality of pulleys of a drive mechanism in an endless configuration with a predetermined tensioning, comprising:
- a cylindrical envelope having a base adapted to be secured to a fixed support;
- a damping group arranged inside the cylindrical envelope and having a stem slidably guided through the inner walls of said cylindrical envelope and a head provided at the end of the stem;
- an elastic biasing element for applying on the belt a force oriented in a predetermined direction to oppose slackenings of the belt;
- means for connecting the damping group to the biasing element, said connecting means acting on the head of the stem and cooperating with the biasing element to apply to the belt forces acting in said predetermined direction to maintain said predetermined tensioning, characterized by the fact that comprises:
- a sleeve slidably and coaxially mounted on the cylindrical envelope and having a flange at one end thereof and suitable for acting on the belt;
- a lid mounted on the flange of the sleeve , said elastic biasing element being mounted around said sleeve and acting between the base of the cylindrical envelope and said flange of the sleeve whereby the biasing element acts independently of the damping group in response to instantaneous elongations of the belt and forms part of said damping group for thrusts of the belt acting on the tensioning device in direction opposite to said predetermined direction.

The present invention will be better understood by the following detailed description made by way of non-limiting example with reference to the figures of the attached sheets of drawing in which:
- FIGURE 1 -: is a schematic view either of a flexible belt wound around the pulleys of a drive according to an annular configuration or the tensioning device according to the invention acting on a branch of the belt;
- FIGURE 2 -: is a section of the tensioning device of figure 1;
- FIGURE 3 -: is a section of an operative condition of the device of figure 2;
- FIGURE 4 -: shows schematically an alternative embodiment of the tensioning device according to the invention.

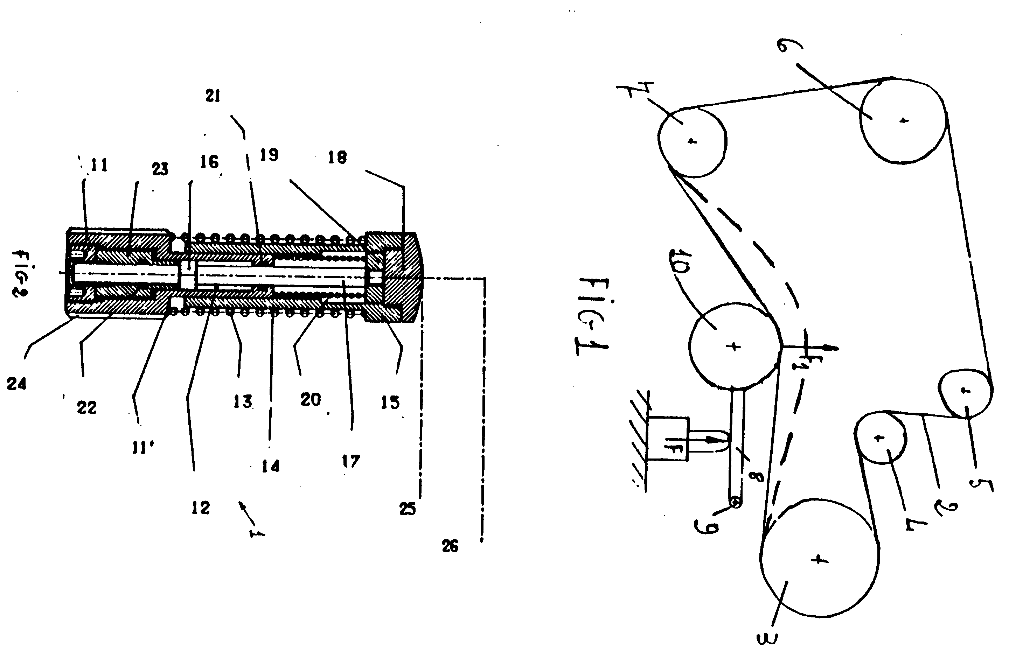

Figure 1 shows with reference numeral 1 a tensioning device intended to be associated with a flexible belt 2, of elastomeric material or the like, wound around the pulleys of a drive to originate an annular configuration having a predetermined tensioning for a correct working of the drive.

In the figure 1 the pulley 3 is a driving pulley and the pulleys 4, 5, 6 are driven pulleys suitable for transmitting the movement to a plurality of accessories, for example in a motorvehicle.

The tensioner 1 comprises mainly an elastic biasing element and a damping group, the former exerting a force in the predetermined direction F to which a force applied on the belt back corresponds, the latter intended to damp the movement of the belt in direction opposite to the predetermined direction F.

The tensioner 1 acts on a lever 8 hinged at one end 9 to a frame fixed with respect to the belt and having the opposite end associated with a rotating roller 10 acting under pressure on the back of the belt 2 according to the direction F₁.

The biasing element and the damping group exert on the belt forces acting at the same time in the direction F to maintain the cited predetermined tensioning.

Moreover an essential characteristic of the present invention is constituted by the fact that the biasing element acts independently of the damping group in presence of belt slackenings which are represented with a dashed line in figure 1 and forms part of the group for damping the thrusts acting on the device in direction opposite to F.

A further characteristic of the invention provides moreover means for connecting the damping group to the biasing element.

The connecting means comprise an elastic system whose reaction acts in the cited predetermined direction F.

Also a further characteristic of the invention is constituted by the fact that the previously cited parts, i.e. the biasing element, the damping group and the connecting means, make part of a single unit comprising one end secured to the frame and the opposite end acting at an intermediate point of the lever 8.

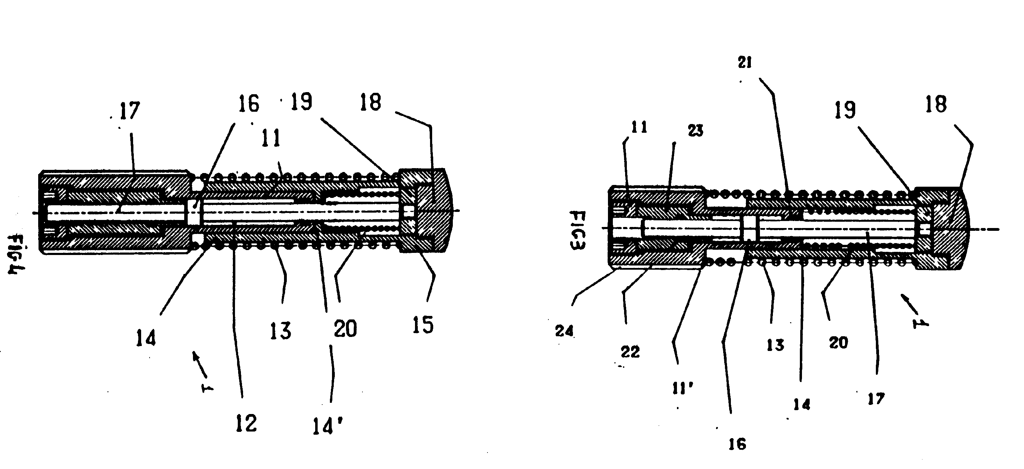

In the preferred embodiment of figure 2, the tensioning device 1 comprises a cylindrical envelope 11; inside said cylindrical envelope there is a damping group 12, for instance of hydraulic type, while outside, concentrically to the envelope, there is a biasing element in the form of a cylindrical metallic spring 13.

The metallic spring is associated around a sleeve 14 provided with a flange 15 supporting one end of the spring; the sleeve already provided with the spring is slidingly mounted on the outer walls of the envelope 11 and the flange 15 is arranged towards the upper part of the tensioning device. Moreover the spring 13 leans against a step 11' of the envelope.

The damping group 12 on its turn comprises a damping liquid contained inside the envelope, a piston 16 immersed in the liquid, a stem 17 associated at one end with the piston 16 and projecting from the upper base of the envelope 11 with the other end, a very narrow space between the piston and the inner walls of the envelope to determine a blow-by of liquid from one part to the other of the piston which is subject to move.

The piston determines in the envelope 11 two chambers here called upper chamber and lower chamber.

As shown in figure 2 the upper end of the sleeve 14 is closed by a lid 18 abutting on the flange 15 and the free end of the stem 17 is provided with a head 19 abutting on the lower surface of the lid in conditions of maximum compression of the tensioning device shown in the figure itself.

According to a preferred solution of the invention the means for connecting the damping group 12 and the biasing element 13 comprise a further second spring 20 arranged inside the sleeve between the upper base of the envelope and the head 19 of the end of the stem 17.

The tensioning device of figure 1 comprises also a sealing strip 21 between the stem and the upper base of the envelope 11 and a sealing strip 22 between the stem and a core-like element 23 forming the lower part of the envelope.

The tensioning device 1 comprises securing means with a suitable frame fixed with respect to the belt.

Preferably said means can be constituted by a screw thread 24 around the envelope 11 and by a corresponding surface threaded on the frame to which the tensioner is secured.

The embodiment of figure 1 foresees means for blocking the maximum shifting of the sleeve 14 corresponding to the condition of maximum excursion of the spring 13 between the lines 25 and 26.

Said blocking means are constituted by narrow opening or slot 27 obtained on the sleeve, by a pin 28 projecting from the upper base of the envelope, and by a protuberance 29 projecting perpendicularly to the sleeve; in the condition of maximum excursion of the spring 13 the protuberance 29 abuts on the pin 28.

According to an alternative embodiment of the invention the spring of the means for connecting the damping group 12 to the biasing element 13 can be arranged in a different way than that shown in figure 2 and in particular said spring can be inserted inside the envelope 11 between the lower surface of the piston 16 and the lower base of the envelope 11.

According to a further embodiment shown in figure 4 the spring useful for the connection of the damping group 12 to the biasing element 13 can be arranged inside the sleeve 14 around the stem 17 between the head 19 at the free end of the stem and the flange 14' of the sleeve.

The cited solution permits a precompression of the spring 20 when the spring 13 extends upwards.

According to a further embodiment, also based on that of figure 4, the spring 13 could operate between the supporting surface to which the envelope base is secured and the lid 18 and also in this solution the spring 20 could be mounted between the head 19 of the stem 17 and the base of any whatsoever case associated with the lid 18.

The tensioning device shown in the figures 2 and 4 can be applied to flexible belts of different type.

In particular the tensioning device can be applied to toothed belts of elastomeric material or the like, among which polyurethane.

In the solution of figures 2 and 3 it has been found convenient to arrange a biasing element whose elastic reaction, opposing the elongations of the belt, has a value comprised between 20% and 70% of the total load of the tensioning device necessary for maintaining the starting predetermined tension.

The tensioning devices of the invention can be applied to flexible belts of elastomeric material or the like comprising surfaces apt to the transmission of forces by friction with surfaces of one or more pulleys.

In this solution it has been found convenient to realize the tensioning device with biasing elements whose reaction opposing the slackening of the belt has a value comprised between 40% and 80% of the total load of the tensioner to maintain the starting predetermined tensioning of the belt.

The working of the tensioning device schematized in the operative condition of figure 3 when associated with the flexible belt of figure 1 is now described.

Let's suppose an increase in the annular length of the belt, according to the configuration shown with a dashed line in figure 1, caused by a strong variation of the motive torque acting on the pulley 3.

In this hypothesis of transient working the branch of the belt comprised between the pulleys 3 and 7 does not transmit thrusts to the roller 10.

Consequently the spring 13 of the biasing element released, according to the principle of the present invention, of any dependence from the damping group, pushes immediately the lid 18 upwards in the direction of the arrow F advancing through the roller 10 the back of the belt into a new tensioning position determined by the characteristic of the spring 13 in relation to its extension.

On its turn the damping group 12 not receiving on the free end of the stem 17 a thrust downwards exerted by the lid 18 which, moved away upwards,tends to transmit through the spring 20 a thrust upwards to the piston 16.

The movement of the piston 16 is not immediate as that of the spring 13 since it is subject to a viscous effect. In fact, the movement of the piston 16 upwards can take place as the pressure of the spring 20 winning the pressure of the viscous liquid in the upper chamber of the envelope 11 causes the blow-by of the liquid between the very narrow space existing between the walls of the piston 16 and the inner walls of the envelope 11.

After all, the means for connecting the damping group to the biasing element join gradually the damping group to the biasing element in the new balance position; in this new position the head 19 of the stem 17 is in contact with the lower surface of the lid 18.

Let's suppose now that in the new tensioning condition or also in the starting tensioning condition, the belt suffers an increase of tension, for example when the thermal expansions acting on the supports of the pulleys 3 and 7 have the tendency to space the two pulleys from each other increasing the tension transmitted by the belt to the roller 10.

In this new hypothesis the roller 10 is subject to a thrust that the belt exerts from inside towards outside. The effect of this thrust tends to cause the shifting of the piston 16 from up downwards with a graduality determined by the resistance met by the damping liquid on passing from the lower chamber to the upper chamber through the narrow space existing between the outer walls of the piston 16 and the inner walls of the cylinder 11.

After all the forcing of the liquid in the cited narrow space determines a damping to the movement of the belt caused by the hypothesized increase of tension.

The working of the tensioning devices according to the alternative embodiment illustrated and described in the figure 4 is substantially the same as that already described with regard to figures 2 and 3.

An working difference can be found in the embodiment of figure 4 for the presence of the flange 14' of the sleeve 14.

In fact in the transient step determined by a slackening of the belt, the piston 16 at first has a tendency to remain still with the head 19 of the stem 17, while the flange 14' is in movement with the sleeve 14.

In this condition the movement of the sleeve 14 makes the spring 20 unstable up to such a value as to originate a storage of energy which is then returned accelerating the connection between the damping group 12 and the spring 13 in the new operative position.

In the transient step the thrust on the belt given by the device is the difference between the action of the spring 13 and the reaction of the spring 20.

Only when the head 19 of the stem 17 return into contact with the lid 18 the opposite action of the spring 20 is annulled and only the spring 13 acts on the belt.

In the solution of figure 4 it has been found convenient that during the transient step the thrust on the belt, represented by the difference between the two springs 13 and 20 is comprised between 20% and 70% of the total load of the tensioning device in the drives provided with toothed belts and is comprised between 40% and 80% of the total load of the tensioner for V-belts, flat belts and grooved belts.

The invention achieves all the aimed purposes. In fact in the belt slackening condition, represented with a dashed line in figure 1, thanks to the presence of the biasing element 13 a new immediate tensioning of the belt is obtained avoiding all the drawbacks found in the known tensioning devices.

This optimal result depends on the fact that the biasing element 13 is not connected mechanically to the stem 17 whose movements are strictly connected with viscous effects and i.e. with phenomena linked to a time factor in a measure which is in contrast with an immediate intervention.

Therefore in presence of instantaneous slackenings of the belt, the biasing element 13 can intervene immediately avoiding the risks of the skipping phenomenon of a toothed belt in contact with the belt of a pulley or a sliding of a V-belt on the groove of a pulley as in the already known solutions.

Moreover the characteristic of the invention relating to the presence of means 20 for connecting the damping group 12 to the biasing element 13 permits favourably to restore the connection between the two active parts of the tensioning device.

Therefore in the new position assumed by the roller 10 on the back of the belt, the tensioning device is adjusted again automatically so that it can exert at the same time a thrust in the direction F determined by the forces of reaction of the springs 13 and 20 and at the same time the tensioner is arranged in the condition of being able to damp the return movements of the belt characterized by the thrusts acting in direction opposite to the direction F.

The damping group can comprise liquid blow-by means different from what described, i.e. among other things, one or more holes passing through the thickness of the piston.

In this solution the transversal dimensions of the holes are comparable with the narrow space comprised between the piston and the envelope foreseen in the previously disclosed solution.

In practice, the values that could be chosen for the holes are comprised between 0.01 and 0.08 mm.

Moreover the damping group of hydraulic type could comprise a system provided with valves arranged in such a way as to adjust according to a wished measure the degree of the blow-by of liquid from the upper chamber to the lower chamber and viceversa.

Also this solution would allow the immediate intervention of the biasing element in the hypothesis of slackenings of the belt and this because said element according to the principle of the invention would act in the direction F of figure 1 independently of the damping group, without suffering in any way the retarding phenomena originated by the valves.

Moreover in further embodiments it is possible to arrange a plurality of springs adapted to constitute the biasing element and the connecting means.

## Claims

1. A tensioning device for a flexible belt wound around a plurality of pulleys (3-6) of a drive mechanism in an endless configuration with a predetermined tensioning, comprising:
- a cylindrical envelope (11) having a base adapted to be secured to a fixed support;
- a damping group (12) arranged inside the cylindrical envelope (11) and having a stem (17) slidably guided through the inner walls of said cylindrical envelope (11) and a head (19) provided at the end of the stem (17);
- an elastic biasing element for applying on the belt (2) a force oriented in a predetermined direction to oppose slackenings of the belt;
- means for connecting the damping group to the biasing element, said connecting means acting on the head (19) of the stem and cooperating with the biasing element to apply to the belt forces acting in said predetermined direction to maintain predetermined tensioning,
characterized by the fact that it comprises:
- a sleeve (14) slidably and coaxially mounted on the cylindrical envelope (11) and having a flange (15) at one end thereof and
- a lid (18) mounted on the flange (15) of the sleeve (14) and suitable for acting on the belt, said elastic biasing element being mounted around said sleeve (14) and acting between the base of the cylindrical envelope and said flange (15) of the sleeve (14) whereby the biasing element acts independently of the damping group in response to instantaneous elongations of the belt and forms part of said damping group for thrusts of the belt acting on the tensioning device in direction opposite to said predetermined direction.

2. Device as in claim 1, characterized by the fact that said biasing element comprises at least a spring (13), the thrust of said spring having a value comprised between 20% and 80% of the total load supplied by the tensioning device to originate said predetermined tensioning of the belt.

3. Device as in claim 2, characterized by the fact that the outer walls of the sleeve (14) form a guiding surface for the shiftings of said spring.

4. Device as in claim 3, characterized by the fact that said flange (15) being located near the end of said stem (17) projecting outwardly from said cylindrical envelope.

5. Device as in claim 4, characterized by the fact that the free end of said stem (17) is in contact with the lid (18).

6. Device as in claim 5, characterized by the fact that the means for connecting the damping group to the spring (13) comprises a second spring (20) located inside said sleeve (14) and arranged between the upper base of the envelope (11) and the head (19).

7. Device according to claim 8, characterized by the fact that said spring (13) is in abutment on an annular seat (11') of said envelope (11).

8. Device as in claim 1, characterized in that said biasing element comprises a cylindrical spring (13) having one end secured to a supporting surface integral with the lower base of the envelope and the opposite end connected to the lid (18) , said connecting means comprising a second cylindrical spring (20) arranged between the head (19) of the stem (17) in proximity of its end and a flange (14') of the sleeve (14).

9. Device as in claim 8, characterized by the fact that in the transient step in presence of slackenings of the belt, the thrust on the belt is represented by the difference between the action of said two springs (13 and 20).

10. Device as in any one of preceeding claim, characterized by the fact that said damping group comprises means for the blow-by of liquids.

11. Device as in claim 1, characterized by the fact that said damping group comprises a damping liquid filling the inside of the envelope (11), a piston (16) immersed in the liquid, the stem (17) being associated with the piston (16) and projecting from the envelope (11), a space between the piston and the walls of the envelope for the blow-by of the liquid from opposite parts of the piston which is subject to move.

12. Transmission of motion between belt and pulley comprising a tensioning device (1) as defined in any one of preceeding claims.

13. Transmission of motion as in claim 12, characterized by the fact that the belt and the pulleys are toothed.

14. Transmission of motion as in claim 13, characterized by the fact that the biasing element associated with the tensioning device has a reaction opposing the slackenings of the belt having a value comprised between 20% and 70% of the total load of the tensioning device to maintain a predetermined tension.

15. Transmission of motion as in claim 12, characterized by the fact that the belt is suitable for the transmission of forces by friction with corresponding surfaces of the pulleys.

16. Transmission of motion as in claim 15, characterized by the fact that the biasing element of said tensioning devices has a reaction opposing slackenings of the belt having a value comprised between 40% and 80% of the total load of the tensioner to maintain a predetermined tension.

## Patentansprüche

1. Spannvorrichtung für einen biegsamen Riemen, der um eine Mehrzahl von Riemenscheiben (3 bis 6) eines Antriebsmechanismus in endloser Gestalt mit einer vorbestimmten Spannung läuft, umfassend:
- einen zylindrischen Mantel (11), der eine Basis hat, die an einem ortsfesten Träger befestigt werden kann;
- eine Dämpfungsgruppe (12), die in dem zylindrischen Mantel (11) angeordnet ist und einen Stößel (17), der durch die Innenwände des zylindrischen Mantels (11) gleitbar oder verschiebbar geführt ist, und einen Kopf (19) hat, der an dem Ende des Stößels (17) vorgesehen ist;
- ein elastisches Vorspannelement zum Anlegen einer Kraft an den Riemen (2), die in einer vorbestimmten Richtung orientiert ist, um einem Losewerden des Riemens entgegenzuwirken; und
- eine Einrichtung zum Verbinden der Dämpfungsgruppe mit dem Vorspannelement, wobei die Verbindungseinrichtung auf den Kopf (19) des Stößels wirkt und mit dem Vorspannelement zusammenwirkt, um an den Riemen Kräfte anzulegen, die in der genannten vorbestimmten Richtung wirken, um die vorbestimmte Spannung aufrechtzuerhalten,
dadurch gekennzeichnet,
daß die Vorrichtung aufweist:
- eine Hülse (14), die an dem zylindrischen Mantel (11) verschiebbar bzw. gleitbar und gleichachsig angebracht ist und an einem Ende von ihr einen Flansch (15) hat; und
- eine Kappe (18), die an dem Flansch (15) der Hülse (14) angebracht ist und dazu geeignet ist, auf den Riemen zu wirken, wobei das elastische Vorspannelement rund um die Hülse (14) angeordnet ist und zwischen der Basis des zylindrischen Mantels und dem Flansch (15) der Hülse (14) wirkt, wodurch das Vorspannelement unabhängig von der Dämpfungsgruppe bei Ansprechen auf augenblickliche Verlängerungen des Riemens wirkt und einen Teil der Dämpfungsgruppe bildet für Schubkräfte des Riemens, die auf die Spannvorrichtung in einer Richtung entgegengesetzt zu der genannten vorbestimmten Richtung wirken.

2. Vorrichtung nach Anspruch 1,
dadurch gekennzeichnet,
daß das Vorspannelement wenigstens eine Feder (13) aufweist, deren Schubkraft einen Wert hat, der zwischen 20 % und 80 % der Gesamtbelastung liegt, die durch die Spannvorrichtung geliefert wird, um die genannte vorbestimmte Spannung des Riemens hervorzurufen.

3. Vorrichtung nach Anspruch 2,
dadurch gekennzeichnet,
daß die Außenwände der Hülse (14) eine Führungsfläche für die Verschiebungen der Feder bilden.

4. Vorrichtung nach Anspruch 3,
dadurch gekennzeichnet,
daß der Flansch (15) nahe demjenigen Ende des Stößels (17) angeordnet ist, welches von dem zylindrischen Mantel nach außen vorragt.

5. Vorrichtung nach Anspruch 4,
dadurch gekennzeichnet,
daß das freie Ende des Stößels (17) sich mit der Kappe (18) in Berührung befindet.

6. Vorrichtung nach Anspruch 5,
dadurch gekennzeichnet,
daß die Einrichtung zum Verbindung der Dämpfungsgruppe mit der Feder (13) eine zweite Feder (20) aufweist, die in der Hülse (14) und zwischen der oberen Basis des Mantels (11) und dem Kopf (19) angeordnet ist.

7. Vorrichtung nach Anspruch 2,
dadurch gekennzeichnet,
daß die Feder (13) sich in Anlage an einem ringförmigen Sitz (11') des Mantels (11) befindet.

8. Vorrichtung nach Anspruch 1,
dadurch gekennzeichnet,
daß das Vorspannelement eine zylindrische Feder (13) aufweist, deren eines Ende an einer Tragfläche befestigt ist, die mit der unteren Basis des Mantels integral bzw. einheitlich ist, und deren gegenüberliegendes Ende mit der Kappe (18) verbunden ist, wobei die Verbindungseinrichtung eine zweite zylindrische Feder (20) aufweist, die zwischen dem Kopf (19) des Stößels (17) nahe dessen Ende und einem Flansch (14') der Hülse (14) angeordnet ist.

9. Vorrichtung nach Anspruch 8,
dadurch gekennzeichnet,
daß in dem Übergangsschritt bei Vorhandensein einer Lose des Riemens die Schubkraft an dem Riemen dargestellt ist durch den Unterschied der Wirkung der beiden Federn (13 und 20).

10. Vorrichtung nach irgendeinem vorhergehenden Anspruch,
dadurch gekennzeichnet,
daß die Dämpfungsgruppe Mittel aufweist für das Hindurchtreten von Flüssigkeiten.

11. Vorrichtung nach Anspruch 1,
dadurch gekennzeichnet,
daß die Dämpfungsgruppe eine Dämpfungsflüssigkeit, welche das Innere des Mantels (11) füllt, und einen Kolben (16) aufweist, der in die Flüssigkeit eingetaucht ist, wobei der Stößel (17) dem Kolben (16) zugeordnet ist und von dem Mantel (11) vorragt, und wobei ein Zwischenraum vorgesehen ist zwischen dem Kolben und den Wänden des Mantels für das Hindurchtreten von Flüssigkeit von gegenüberliegenden Teilen des Kolbens, der einer Bewegung unterworfen ist.

12. Bewegungstransmission zwischen einem Riemen und Riemenscheiben, umfassend eine Spannvorrichtung (1) gemäß irgendeinem der vorhergehenden Ansprüche.

13. Bewegungstransmission nach Anspruch 12,
dadurch gekennzeichnet,
daß der Riemen und die Riemenscheiben gezahnt sind.

14. Bewegungstransmission nach Anspruch 13,
dadurch gekennzeichnet,
daß das der Spannvorrichtung zugeordnete Vorspannelement eine einem Losewerden des Riemens entgegenwirkende Reaktion eines Wertes hat, der zwischen 20 % und 70 % der Gesamtbelastung der Spannvorrichtung beträgt, um eine vorbestimmte Spannung aufrechtzuerhalten.

15. Bewegungstransmission nach Anspruch 12,
dadurch gekennzeichnet,
daß der Riemen dazu geeignet ist, Kräfte durch Reibung mit entsprechenden Flächen der Riemenscheiben zu übertragen.

16. Bewegungstransmission nach Anspruch 15,
dadurch gekennzeichnet,
daß das Vorspannelement der Spannvorrichtung eine einem Losewerden des Riemens entgegenwirkende Reaktion eines Wertes hat, der zwischen 40 % und 80 % der Gesamtbelastung der Spannvorrichtung liegt, um eine vorbestimmte Spannung aufrechtzuerhalten.

## Revendications

1. Un dispositif tendeur de courroie flexible enroulée autour d'une série de poulies (3 à 6) d'un mécanisme d'entraînement dans une configuration sans fin sous une tension prédéterminée, comprenant :
- une enveloppe cylindrique (11) dont une base est apte à être fixée sur un support fixe;
- un groupe amortisseur (12) disposé à l'intérieur de l'enveloppe cylindrique (11) et pourvu d'une tige (17), guidée à coulissement à travers les parois intérieures de ladite enveloppe cylindrique (11), et d'une tête (19) disposée à l'extrémité de la tige (17);
- un élément élastique de sollicitation destiné à appliquer sur la courroie (2) une force orientée dans une direction prédéterminée afin de s'opposer à des relâchements de la courroie;
- un moyen de liaison du groupe amortisseur à l'élément de sollicitation, ledit moyen de liaison agissant sur la tête (19) de la tige et coopérant avec l'élément de sollicitation pour appliquer, à la courroie, des forces agissant dans ladite direction prédéterminée afin de maintenir ladite tension prédéterminée,
caractérisé en ce qu'il comprend :
- un manchon (14) monté à coulissement de façon coaxiale sur l'enveloppe cylindrique (11) et pourvu d'une bride (15) à l'une de ses extrémités et
- un couvercle (18) monté sur la bride (15) du manchon (14) et apte à agir sur la courroie, ledit élément élastique de sollicitation étant monté autour dudit manchon (14) et agissant entre la base de l'enveloppe cylindrique et ladite bride (15) du manchon (14) grâce à quoi l'élément de sollicitation agit de façon indépendante du groupe amortisseur en réponse à des allongements instantanés de la courroie et fait partie dudit groupe amortisseur pour des poussées de la courroie agissant sur un dispositif tendeur dans une direction opposée à la direction prédéterminée.

2. Un dispositif selon la revendication 1, caractérisé en ce que ledit élément de sollicitation comprend au moins un ressort (13), la valeur de la poussée dudit ressort étant comprise entre 20 % et 80 % de l'effort total exercé par le dispositif tendeur pour engendrer ladite tension prédéterminée de la courroie.

3. Dispositif selon la revendication 2, caractérisé en ce que les parois extérieures du manchon (14) forment une surface de guidage pour les décalages dudit ressort.

4. Dispositif selon la revendication 3, caractérisé en ce que ladite bride (15) est située près de l'extrémité de ladite tige (17) en saillie vers l'extérieur hors de ladite enveloppe cylindrique.

5. Dispositif selon la revendication 4, caractérisé en ce que l'extrémité libre de ladite tige (17) est en contact avec le couvercle (18).

6. Dispositif selon la revendication 5, caractérisé en ce que le moyen de liaison du groupe amortisseur au ressort (13) comprend un deuxième ressort (20) situé à l'intérieur dudit manchon (14) et disposé entre la base supérieure de l'enveloppe (11) et la tête (19).

7. Un dispositif selon la revendication 2, caractérisé en ce que ledit ressort (13) est en butée sur un siège annulaire (11') de ladite enveloppe (11).

8. Un dispositif selon la revendication 1, caractérisé en ce que ledit élément de sollicitation comprend un ressort cylindrique (13) dont une extrémité est fixée à une surface de support d'un seul tenant avec la base inférieure de l'enveloppe et dont l'extrémité opposée est reliée au couvercle (18), ledit moyen de liaison comprenant un deuxième ressort cylindrique (20) disposé entre la tête (19) de la tige (17), à proximité de son extrémité, et une bride (14') du manchon (14).

9. Dispositif selon la revendication 8, caractérisé en ce que la poussée sur la courroie est représentée, pendant l'étape transitoire en présence de relâchements de la courroie, par la différence entre les effets des deux ressorts (13 et 20).

10. Dispositif selon l'une quelconque des revendications précédentes, caractérisé en ce que ledit groupe amortisseur comprend un moyen de déviation de liquides.

11. Dispositif selon la revendication 1, caractérisé en ce que ledit groupe amortisseur comprend un liquide amortisseur remplissant l'intérieur de l'enveloppe (11), un piston (16) immergé dans le liquide, la tige (17) étant associée au piston (16) et faisant saillie hors de l'enveloppe (11), un espace entre le piston et les parois de l'enveloppe pour la déviation du liquide à partir de parties opposées du piston qui est susceptible d'être déplacé.

12. Transmission de mouvement entre une courroie et des poulies comprenant un dispositif tendeur (1) selon l'une quelconque des revendications précédentes.

13. Transmission de mouvement selon la revendication 12, caractérisé en ce que la courroie et les poulies sont dentées.

14. Transmission de mouvement selon la revendication 13, caractérisé en ce que l'élément de sollicitation associé au dispositif tendeur exerce une réaction, s'opposant aux relâchements de la courroie, dont la valeur est comprise entre 20 % et 70 % de l'effort total du dispositif tendeur afin de maintenir une tension prédéterminée.

15. Transmission du mouvement selon la revendication 12, caractérisé en ce que la poulie est apte à transmettre des forces par friction avec des surfaces correspondantes des poulies.

16. Transmission de mouvement selon la revendication 15, caractérisé en ce que l'élément de sollicitation du dispositif tendeur exerce une réaction, s'opposant à des relâchements de la courroie, dont la valeur est comprise entre 40 % et 80 % de l'effort total du tendeur afin de maintenir une tension prédéterminée.
